# EUROPEAN PATENT APPLICATION

(11) **EP 1 035 750 A2**
(43) Date of publication of application: **13.09.2000**
(21) Application number: 00300931.3
(22) Date of filing: 07.02.2000
(51) Int. Cl.: H04Q 11/00

(54) **Signal transmission system**

(30) Priority: 12.03.1999 GB 9905729
(71) Applicant: MARCONI COMMUNICATIONS LIMITED, Coventry, CV3 1HJ (GB)
(72) Inventor: Slade, Anthony John, Gedling, Nottingham NG4 4WB (GB)
(74) Representative: Hoste, Colin Francis

(57) **Abstract**

In a signal transmission system having a number of routing nodes and in which traffic is carried by a number of optical carriers, an additional supervisory optical carrier carries node identifiers. A large transmission network contains many nodes, with several alternative routes between them, and a routing fault can be difficult to detect. The use of node identifiers on an optical carrier to identify those nodes at which it has been re-routed assists in the rapid identification of system errors.

## Description

This invention relates to a signal transmission system in which traffic data, which may include voice data, is transmitted over a network which includes a number of interconnected nodes. Large telecommunications networks can contain a large number of nodes, and there may exist several possible paths via different nodes between an initial transmission point and a final destination, and the particular path selected for a signal will depend on how busy individual links between pairs of adjacent nodes may be, and on any fault conditions in the network.

In the event of a perceived disconnection in a telecommunications transmission network, it is necessary to determine the reason and correct it to restore the connection. It is not uncommon for a perceived disconnection in a telecommunications transmission network to be brought about by incorrect configuration within a network node, rather than by a faulty device.

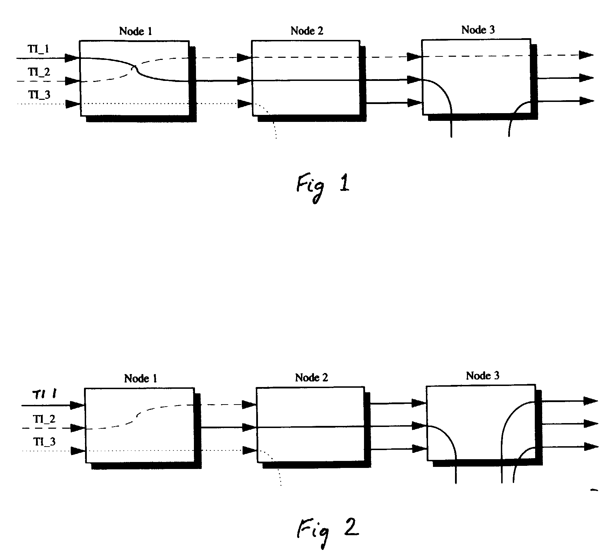

A first example in which an incorrect configuration of a node is shown in Figure 1, in which paths TI 1 and TI 2 have a wrong cross-over in node 1, so that node 3 receives the wrong signal. In this case an operator has two options. If he is in possession of a plan of the entire network connectivity, then he may be able to reduce the number of nodes he needs to check. If the crossed-over paths can be uniquely identified, this is done by considering only those nodes through which the expected path and the received path both pass. If he is not in possession of a plan of the entire network connectivity, he must start at one end of the path and work through systematically.

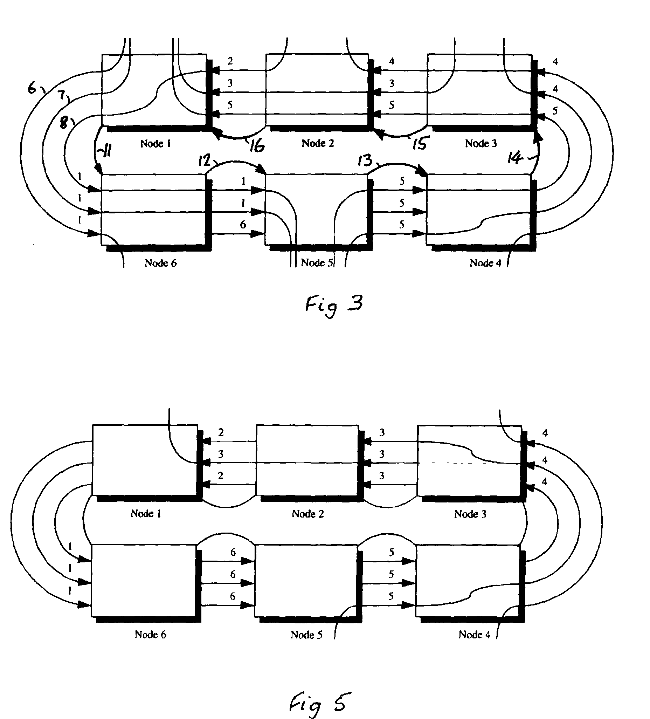

A second example is shown in Figure 2, in which path TI 1 is incorrectly routed at node 1. In this case, the operator has no option but to regress one node at a time along the path. This must be repeated until he finds a node that has no connection for the path in which he is interested. This can be a difficult process, and the present invention seeks to provide an improved signal transmission system.

According to this invention, a signal transmission system includes a plurality of nodes which are interconnected so as to be capable of carrying traffic between selected nodes, means for carrying a supervisory signal between nodes which is independent of the presence of traffic, and means at each node for determining the presence of node identifiers on the supervisory signal, a node identifier being associated with each intended path through the network to indicate its route, and wherein traffic is carried by a plurality of optical traffic carriers, and wherein said node identifiers are carried by a separate common optical carrier which carries said supervisory signal.

The invention is further described by way of example with reference to the accompanying drawings in which:
Figure 3 illustrates diagrammatically an example of parts of a signal transmission system in accordance with the invention.
Figure 4 shows part of Figure 3 in greater detail, and
Figure 5 shows part of a malfunctioning transmission system.

Referring to Figure 3, part of a signal transmission system consists of a ring network having six nodes, 1 to 6. For the purpose of illustration, each node is assumed to have only three output path connections and only three input path connections, but in practice, a larger number, for example eight, would be provided. The transmission system is an optical network in which light guides connect node 1 to node 2, and node 2 to node 3, and so on, and each light guide carries a number of separate optical carriers, each of a different wavelength in a so-called wave division multiplex (WDM) format. In this example, there are eight such optical carriers which carry traffic, and an additional optical supervisory carrier. The three inputs/outputs of each node represent these optical carriers, each of which carries a very large number of traffic data channels and each channel is associated with a separate path through the network, and they may be carried by the same optical carrier across the network or by different optical carriers between each pair of nodes according to traffic loading and routing requirements.

The input port at each node has a node identifier number 1 to 6 associated with it, and this identifies the preceding node at which a routing event occurred, ie it excludes those nodes which simply provided a straight through path. Thus, considering node 1, all of its three output signals have experienced a routing event at that node, paths 6 and 7 having entered the network, and path 8 having been switched from different ports on opposite sides of the connection matrix which constitutes the node.

Considering the input ports of node 5, it will be seen that two paths have node identifier 1, as they were last routed by node 1 and have passed straight trough node 6. The third port has node identifier 6, as it originated at node 6.

For the sake of clarity only the anticlockwise direction of travel around the ring network is shown, but in practice it is bi-directional, and as previously mentioned, a very large number of separate paths would exist.

The node identifiers are transported from node to node on a separate supervisory optical carrier, which does not itself carry traffic, but which may carry other routing and system management information.

In order to diagnose disconnected paths, it is imperative that the node identifier for each path is carried by some means that does not rely on the presence of any physical signal for the path being investigated. The system is implemented by carrying the node identifier of every possible path within the separate supervisory signal that exists only between nodes. This is particularly important in a photonics (optical) network as, without the provision of expensive lasers for every path on every section, a configuration error resulting in the disconnection of a path results in a total absence of path signal to the receiving node and hence no means of carrying the associated node identifier.

These supervisory paths 11 to 16 which link all possible pairs of nodes in the ring network, carry the node identifiers. Thus, each node is operative to transmit to the next node an unaltered node indicator if it performs no routing function, and if it performs a routing function it inserts its own node indicator, and deletes any previous node indicator if one is present.

In this example, the node identifiers for all eight optical channels in each direction between each pair of nodes are carried in dedicated bytes of a framed section overhead signal which is modulated onto the separate 'supervisory' wavelength which is in the 1510nm range.

A central control unit within each node collects eight node identifiers from each of the two receiving line units, one for each direction of travel around the ring. Dependent upon the configuration of the connection matrix, the central control unit then sends the appropriate eight node identifiers to each of the transmitting line units for transmission to the neighbouring equipments.

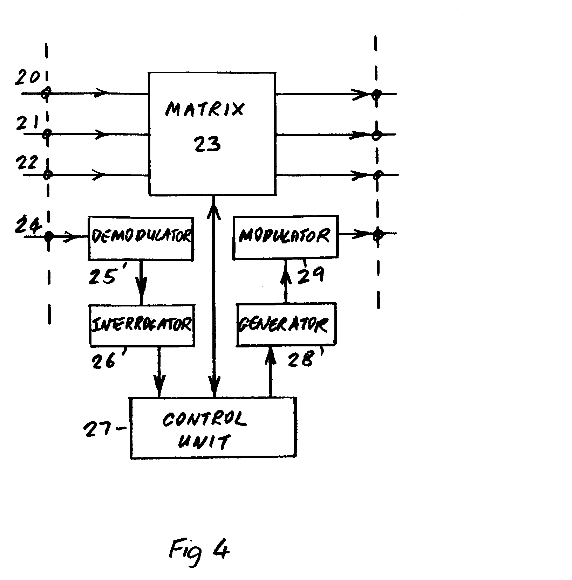

A node is shown in more detail in Figure 4, in which the input ports 20, 21, 22, which receive the traffic data, are connected to a connection matrix 23. The supervisory channel is received at input port 24, and a demodulator 25 extracts the incoming node identifier from the supervisory optical carrier, and passes the node identifiers to an interrogation unit 26 which collects them, and in dependence on the configuration of the connection matrix 23, a central control unit 27 instructs a generator 28 to generate appropriate node identifiers which sends them to a modulator 29 for transmission on the supervisory carrier to the neighbouring node.

Referring to Figure 5, the ring network shown therein has a malfunction as the intended path between node 5 and node 1 (shown dashed at node 3) should result in node 1 receiving a node identifier of 4 for that path. Because a node identifier of 3 is received rather than 4, the operator is immediately aware that node 3 is performing some connection other than the straight-through that was intended. The operator has now located the most likely point of misconnection.

## Claims

1. A signal transmission system including a plurality of nodes which are interconnected so as to be capable of carrying traffic between selected nodes, means for carrying a supervisory signal between nodes which is independent of the presence of traffic, and means at each node for determining the presence of node identifiers on the supervisory signal, a node identifier being associated with each intended path trough the network to indicate its route, and wherein traffic is carried by a plurality of optical traffic carriers, and wherein said node identifiers are carried by a separate common optical carrier which carries said supervisory signal.

2. A system as claimed in Claim 1 or 2 and wherein each node includes means which inserts onto said supervisory signal a node identifier indicative of that node, and which is inserted whenever that node performs a routing function on that optical traffic carrier to which it relates.

3. A system as claimed in any of the preceding claims and wherein each node includes means for detecting received node identifiers, and associating them with respective received optical traffic carriers.
